# FASCICULE DE BREVET EUROPEEN

(11) **EP 3 091 305 B1**
(45) Date de publication et mention de la délivrance du brevet: **11.04.2018**
(21) Numéro de dépôt: 16168075.6
(22) Date de dépôt: 03.05.2016
(51) Int. Cl.: F24H 4/04, F24H 9/00, F24D 17/00, F24D 17/02, F28G 1/16, F24F 5/00

(54) **CHAUFFE-EAU THERMODYNAMIQUE**
THERMODYNAMISCHER BOILER
THERMODYNAMIC WATER HEATER

(30) Priorité: 07.05.2015 FR 1554103
(43) Date de publication de la demande: 09.11.2016
(73) Titulaire: Atlantic Climatisation et Ventilation, 69330 Meyzieu (FR)
(72) Inventeur: DEMIA, Laurent, 01120 MONTLUEL (FR); PARIS, Sabine, 69150 DECINES (FR); ESCBACH, Antoine, 38290 FRONTONAS (FR); SAISSET, Luc, 38460 VILLEMOIRIEU (FR)
(74) Mandataire: Cabinet Plasseraud

(56) Documents cités:
- EP-A1- 2 056 025
- EP-A1- 2 306 110
- EP-A1- 2 444 748
- US-A- 5 809 800

## Description

Un chauffe-eau thermodynamique est un chauffe-eau dont le fonctionnement repose sur une boucle thermodynamique, dans laquelle un compresseur est relié à un condenseur lui-même relié à un détendeur, lui-même relié à un évaporateur, qui est relié au compresseur, ce qui ferme la boucle.

Dans cette boucle, circule un fluide de travail qui est mis en mouvement et comprimé dans le compresseur, puis subit une condensation dans le condenseur avant d'être détendu dans le détendeur et enfin subit une évaporation dans l'évaporateur.

L'évaporateur et le condenseur sont des échangeurs de chaleur, dans chacun desquels le fluide de travail échange partiellement son énergie thermique avec un autre fluide.

Dans un chauffe-eau thermodynamique, le condenseur est généralement disposé autour d'une cuve de réserve d'eau destinée à alimenter en eau chaude un local, tel qu'une habitation, équipé du chauffe-eau. Le condenseur peut également être disposé sous forme de serpentin à l'intérieur de ladite citerne. Il peut encore être disposé sur une portion de tubulure reliée à la cuve par deux orifices et équipé d'une pompe de circulation. L'eau est chauffée par la condensation du fluide de travail qui lui cède son énergie thermique.

L'évaporateur est généralement disposé au-dessus ou au-dessous de la cuve, ou encore déporté de la cuve (par exemple à l'extérieur du local) de sorte que le fluide de travail échange son énergie thermique avec un flux d'air qui peut être de ventilation, ou de l'air ambiant d'un local ou de l'air extérieur.

Ainsi, un tel chauffe-eau thermodynamique récupère une partie au moins de l'énergie thermique de l'air, ce qui assure le chauffage de l'eau stockée dans la cuve d'eau à moindre coût tout en respectant l'environnement.

Néanmoins, un tel chauffe-eau thermodynamique présente l'inconvénient de nécessiter un entretien régulier de ses composants, et notamment des échangeurs de chaleur.

En particulier, l'évaporateur comprend des ailettes formant surface d'échange entre l'air et le fluide de travail, et sur lesquelles des poussières se déposent et des graisses se condensent, en particulier au cours de l'échange thermique entre les fluides.

Il est possible d'équiper le chauffe-eau thermodynamique d'un filtre à air permettant de limiter la quantité de poussière et de graisse déposée.

Dans ce cas, le filtre doit être régulièrement entretenu.

Par ailleurs, l'encrassement de l'évaporateur, comme du filtre, induit une perte de charge et, par conséquent, une baisse d'efficacité de la boucle thermodynamique.

Un autre inconvénient est dû au fait que selon le niveau d'échange thermique, ou, quand la température extérieure est faible, l'humidité contenue dans l'air se condense et dépose des gouttelettes d'eau qui givrent sur l'évaporateur.

Le givrage de l'évaporateur réduit la surface d'échange entre les fluides, ce qui conduit à une baisse d'efficacité de la boucle thermodynamique.

De plus, le nettoyage nécessaire de l'évaporateur et/ou du filtre impose de réaliser cette opération par un opérateur dûment expérimenté (l'évaporateur est fragile) et d'accéder physiquement au filtre et à l'évaporateur qui sont souvent d'un accès difficile et en hauteur.

En ce qui concerne le dégivrage, il est possible d'arrêter le compresseur, ou de recourir à une inversion de la boucle thermodynamique, de sorte que l'évaporateur fonctionne temporairement en tant que condenseur.

Néanmoins, ces méthodes connues nécessitent de suspendre le chauffage de l'eau le temps de dégivrer l'évaporateur, ce qui n'est évidemment pas satisfaisant d'un point de vue énergétique, et/ou en terme de performance et/ou de confort.

Le but de la présente invention est de remédier au moins partiellement à ces inconvénients.

Le document EP 2056025 A1 divulgue le préambule de la revendication 1. A cet effet, l'invention a pour objet un chauffe-eau thermodynamique selon la revendication 1. Ainsi, ladite au moins une buse de pulvérisation d'eau assure un nettoyage du chauffe-eau thermodynamique, ce qui permet un entretien automatisé du chauffe-eau thermodynamique, sans nécessiter l'intervention d'un opérateur et sans avoir recours à des consommables couteux.

Selon l'invention, le chauffe-eau thermodynamique comprend un filtre à air.

Selon une autre caractéristique de l'invention, le chauffe-eau thermodynamique comprend un conduit d'approvisionnement en eau chaude d'un local, éventuellement eau chaude sanitaire, connecté au réservoir d'eau.

Selon l'invention, l'une au moins des buses de pulvérisation est configurée pour pulvériser de l'eau sur au moins un échangeur de chaleur du chauffe-eau thermodynamique et/ou ledit filtre à air.

Selon une autre caractéristique de l'invention, le chauffe-eau thermodynamique comprend une vanne d'ouverture dudit au moins un conduit de sortie.

Selon une autre caractéristique de l'invention, la vanne d'ouverture est configurée pour ouvrir ledit au moins un conduit de sortie en fonction de l'état d'au moins un paramètre de pilotage d'ouverture de la vanne.

Selon une autre caractéristique de l'invention, ledit au moins un paramètre de pilotage d'ouverture de la vanne est un paramètre de détection d'encrassement du filtre à air et/ou de givrage dudit au moins un échangeur de chaleur et/ou un paramètre temporel et/ou un seuil de pression d'eau dans le réservoir d'eau de préférence d'une valeur comprise entre 3 bars et 10 bars et/ou un seuil de température d'eau dans le réservoir d'eau d'une valeur de préférence comprise entre 45°C et 70°C.

Selon une autre caractéristique de l'invention, le chauffe-eau thermodynamique comprend un réservoir de produit nettoyant en communication fluidique avec le conduit de sortie.

Selon une autre caractéristique de l'invention, le conduit de sortie comprend un clapet anti-retour.

Selon une autre caractéristique de l'invention, le chauffe-eau thermodynamique comprenant un ventilateur, de préférence configuré pour gérer la ventilation d'un local.

Selon une autre caractéristique de l'invention, le chauffe-eau thermodynamique est adapté pour générer une eau chaude sanitaire pour un local.

L'invention a également pour objet un procédé de nettoyage d'un chauffe-eau thermodynamique selon la revendication 9. Selon une autre caractéristique de l'invention, le procédé comprend une étape d'ouverture de la vanne en fonction de l'état d'au moins un paramètre de pilotage d'ouverture de la vanne.

D'autres caractéristiques et avantages de l'invention apparaîtront encore à la lecture de la description qui va suivre. Celle-ci est purement illustrative et doit être lue en regard des dessins annexés sur lesquels :
- la figure 1 illustre une schématique d'une habitation équipée d'un chauffe-eau thermodynamique selon la présente invention ;
- la figure 2 illustre une vue schématique selon une variante de la figure 1;
- la figure 3 illustre une vue en coupe longitudinale d'une partie supérieure d'un chauffe-eau thermodynamique;
- la figure 4 illustre une vue en coupe longitudinale d'une partie supérieure d'un chauffe-eau thermodynamique selon un mode de réalisation de l'invention;
- les figures 5 et 6 illustrent des étapes de nettoyage d'un évaporateur ou d'un filtre d'un chauffe-eau thermodynamique selon la présente invention.

### Habitation équipée d'un chauffe-eau thermodynamique selon la présente invention

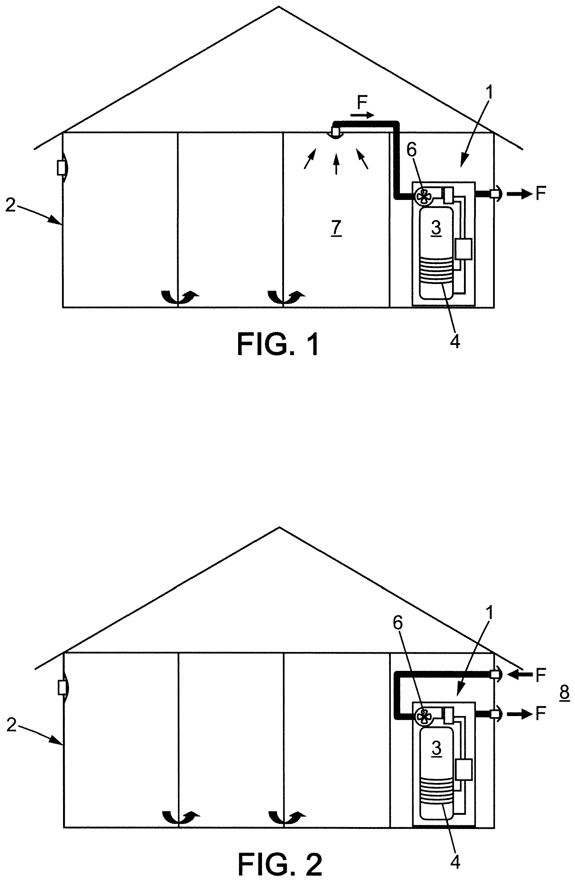

L'invention va maintenant être décrite en relation avec les figures 1 et 2.

Les figures 1 et 2 illustrent un positionnement d'un chauffe-eau thermodynamique 1 selon la présente invention dans une habitation 2.

Par habitation, on entend tout type de local, tel qu'un logement, individuel ou collectif, ou un local à usage tertiaire approvisionné en eau chaude.

Le chauffe-eau thermodynamique 1 est un chauffe-eau dont le fonctionnement repose sur une boucle thermodynamique.

Le chauffe-eau thermodynamique 1 comprend un réservoir d'eau à chauffer 3 ou cuve 3.

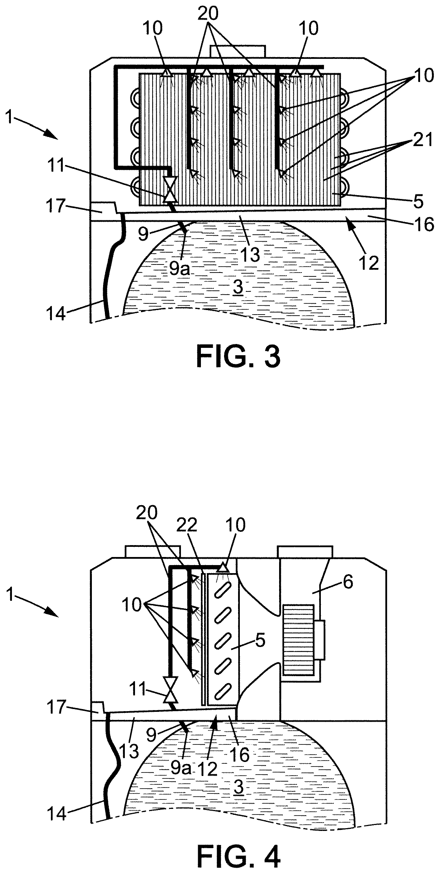

Sur les modes de réalisation illustrés, le chauffe-eau thermodynamique 1 comprend deux échangeurs de chaleur, un condenseur 4 et un évaporateur 5 illustré à la figure 3.

Un compresseur (non illustré) est relié au condenseur 4 lui-même relié à un détendeur (non illustré), lui-même relié à l'évaporateur 5, qui est relié au compresseur, ce qui ferme la boucle.

Dans la boucle, circule un fluide de travail qui est mis en mouvement et comprimé dans le compresseur, puis subit une condensation dans le condenseur 4 avant d'être détendu dans le détendeur et enfin subit une évaporation dans l'évaporateur 5.

Dans l'évaporateur 5 et le condenseur 4, le fluide de travail échange partiellement son énergie thermique avec un autre fluide.

Comme visible sur les figures 1 et 2, le condenseur est disposé autour du réservoir d'eau 3. L'eau est chauffée par la condensation du fluide de travail qui lui cède son énergie thermique.

Le condenseur peut être dans certains cas installé à l'intérieur de la cuve ou aussi en position d'échange avec une autre boucle d'eau faisant office d'échange intermédiaire, ce qui assure que deux barrières fluidiques sont mises en place dans ce cas.

Comme plus particulièrement visible à la figure 3, l'évaporateur 5 est disposé au-dessus du réservoir d'eau 3, de sorte que le fluide de travail échange son énergie thermique avec un flux d'air F.

Dans certains cas, la cuve est désolidarisée du sous-ensemble compresseur, évaporateur, ce dernier étant positionné à l'extérieur du local.

Un ventilateur 6 permet une mise en mouvement du flux d'air F afin d'optimiser l'échange thermique dans l'évaporateur 5.

Selon la variante illustrée à la figure 1, le flux d'air F est extrait d'une zone 7 de l'habitation 2 où le flux d'air F est issu d'une ou plusieurs bouches d'aération.

La zone 7 peut être un ensemble de pièces, typiquement, une cuisine ou une salle de bain par exemple, ou encore la pièce dans laquelle le chauffe-eau 1 est installé.

Selon la variante illustrée à la figure 2, le flux d'air F est extrait d'une zone 8 extérieure à l'habitation 2.

La zone extérieure 8 est soit un local distinct de l'habitation 2 (un garage, une cave par exemple), soit un espace à l'air libre.

Avantageusement, le ventilateur 6 est aussi configuré pour gérer la ventilation d'un local, tel que par exemple la zone 7, ou plus généralement l'habitation 2.

### Modes de réalisation du chauffe-eau thermodynamique selon la présente invention

L'invention va maintenant être décrite en relation avec les figures 3 à 6, dans lesquelles le chauffe-eau thermodynamique 1 est disposé verticalement.

Le chauffe-eau thermodynamique 1 comprend au moins un conduit 9 de sortie de l'eau hors du réservoir d'eau 3.

Sur les modes de réalisation illustrés, le chauffe-eau thermodynamique 1 comprend un conduit de sortie 9.

Le conduit de sortie 9 comprend une extrémité 9a de piquage du réservoir d'eau 3.

L'extrémité de piquage 9a est de préférence disposée dans la partie sommitale de la cuve 3, de sorte que le conduit de sortie 9 prélève de l'eau dans la partie sommitale, qui correspond à la partie du réservoir d'eau dans laquelle l'eau est de température la plus élevée.

Le chauffe-eau thermodynamique 1 comprend un canal non illustré et connecté au réservoir d'eau 3, éventuellement par le piquage 9a, pour alimenter en eau chaude, de préférence sanitaire, l'habitation 2.

Le canal d'alimentation, non illustré, est de préférence distinct du conduit de sortie 9.

Grâce au canal d'alimentation, le chauffe-eau thermodynamique 1 est adapté pour générer une eau chaude sanitaire pour un local, tel que l'habitation 2.

Comme visible sur les figures 3 à 6, le conduit de sortie 9 est muni d'au moins une buse de pulvérisation d'eau 10.

Ladite au moins une buse de pulvérisation d'eau 10 est un embout permettant de diffuser des jets de gouttelettes d'eau, de manière connue de l'homme du métier.

Sur les modes de réalisation illustrés, le chauffe-eau thermodynamique 1 comprend plusieurs buses de pulvérisation 10.

Bien entendu, il est possible de munir le chauffe-eau thermodynamique 1 d'une seule buse de pulvérisation 10.

Les buses de pulvérisation 10 assurent un nettoyage du chauffe-eau thermodynamique 1, comme il va être décrit ci-après.

Les buses de pulvérisation sont configurées pour asperger d'eau un composant du chauffe-eau thermodynamique, à savoir un filtre et le cas échéant un évaporateur, comme il va être détaillé.

Les buses 10 sont par exemple en silicone ou plus généralement en élastomère, ce qui limite l'entartrage et sont d'un entretien aisé.

Les buses 10 sont par exemple rotatives, actionnées par un moteur ou via une pression d'un réseau d'eau. En effet, associé à une buse, le jet orienté de manière légèrement radiale par rapport à un axe de rotation crée en projetant l'eau une réaction qui peut mettre en mouvement de rotation cette même buse selon le dit axe.

Les buses 10 sont toutes identiques ou au contraire présentent des caractéristiques différentes, telles que des tailles ou des formes d'un ou des orifices de sortie (fente, circulaire, elliptique).

De préférence, les buses 10 comprennent des orifices de sortie d'une dimension de l'ordre de 1 mm.

Comme visible sur les figures 3 à 6, le chauffe-eau thermodynamique 1 comprend également une vanne d'ouverture 11 du conduit de sortie 9.

La vanne d'ouverture 11 est mobile entre une position d'ouverture dans laquelle l'eau circule depuis le réservoir d'eau 3 jusque dans le conduit de sortie 9 et une position de fermeture dans laquelle l'eau du réservoir d'eau 3 ne peut pas pénétrer dans le conduit de sortie 9.

La vanne d'ouverture 11 est avantageusement une électrovanne pilotée par une unité de pilotage, comme il sera expliqué ci-après. Cette vanne 11 peut être manuelle, actionnée par un occupant, par exemple de manière périodique.

Avantageusement, le chauffe-eau thermodynamique 1 comprend un réservoir (non illustré) de produit nettoyant (détergent ou dégraissant) pour adjoindre le liquide nettoyant à l'eau de nettoyage, par exemple par venturi ou un système de dosage.

Un rinçage (sans produit détergent) est potentiellement réalisé après utilisation du produit détergent.

Le réservoir de produit nettoyant est de préférence en relation fluidique avec le conduit de sortie 9.

De préférence, le conduit de sortie 9 est muni d'un clapet anti-retour, non illustré.

Le clapet anti-retour assure que l'eau ne peut circuler que vers l'extérieur du réservoir 3, ce qui évite tout reflux vers le réservoir, qui aurait pour conséquence de salir l'eau contenue dans le réservoir 3.

Comme visible sur les figures 3 à 6, le chauffe-eau thermodynamique 1 comprend également un système 12 d'évacuation de l'eau de nettoyage souillée et des condensats, appelés par la suite eau usée.

Le système d'évacuation 12 comprend une surface 13 de recueil de l'eau usée et un conduit d'évacuation 14.

Sur les modes de réalisation illustrés aux figures 3 et 4, la surface 13 fait partie d'une paroi présentant une pente depuis une partie haute 16 à une partie basse 17, au niveau de laquelle l'eau usée s'accumule.

Le conduit d'évacuation 14 est connecté à la partie basse 17. L'eau usée est évacuée hors du chauffe-eau thermodynamique 1 à travers le conduit d'évacuation 14.

Etant donné le volume d'eau potentiellement évacué et sa composition, il existe un risque de bouchage du conduit d'évacuation, notamment lié à la solidification de particules grasses ramollies par le lavage. Dans le cas où le dit conduit d'évacuation serait amené à s'obturer, il existe un risque réel de débordement du réceptacle disposé sous l'évaporateur et destiné à recueillir les eaux de condensation naturelle et de lavage.

En cas de débordement, le risque est de générer un dégât des eaux dans le local où est installé le chauffe-eau, ou une immersion de parties sensibles non censées être en contact avec de l'eau (parties électriques par exemple).

Pour surveiller ce risque d'obturation, un système de capteur, non illustré, est avantageusement installé à l'entrée du conduit d'évacuation. Par capteur, on entend tout système de détection de l'absence d'écoulement des eaux usées ; des capteurs connus sont soit électriques (résistifs), à clapet ou à bille, etc.

Au cas où le dit capteur détecte un début de congestion du conduit d'évacuation 14, il empêche le fonctionnement du cycle de lavage décrit ci-dessus et signale par un moyen la mise à l'arrêt du lavage automatique et du dégivrage automatique, et potentiellement de la pompe à chaleur.

Selon le mode de réalisation illustré à la figure 3, le chauffe-eau thermodynamique 1 comprend un réseau de trois canaux de dérivation 20 reliés au conduit de sortie 9.

Une pluralité de buses 10 est connectée au conduit 9 et à chaque canal de dérivation 20, les buses 10 étant organisées en rangées et colonnes.

Les buses de pulvérisation 10 sont configurées de sorte que les gouttelettes issues de chaque buse 10 atteignent l'évaporateur 5.

Comme visible sur la figure 3, l'évaporateur 5 comprend des ailettes 21 à travers lesquelles circulent d'une part le flux d'air F et d'autre part le fluide de travail.

Les ailettes 21 constituent les surfaces d'échange entre les deux fluides.

Il est préférable d'avoir les ailettes de l'évaporateur verticales pour une meilleure évacuation des eaux usées.

Sur les ailettes 21, se déposent des poussières et des graisses que les buses 10 permettent de nettoyer.

De même, les ailettes 21 peuvent être recouvertes de condensats quand la température autour de l'évaporateur est faible, car des gouttes ou de l'humidité contenues dans le flux d'air F et déposées sur l'évaporateur peuvent givrer.

Les buses de pulvérisation 10 sont disposées à une distance des ailettes 21 telles que l'eau atteint les ailettes 21, ce qui assure le nettoyage de l'évaporateur 5.

On note qu'on entend par nettoyage toute opération de désincrustation d'une partie au moins de la surface d'échange de l'évaporateur de tout élément obstruant la surface d'échange, y compris les poussières, graisses, et eau givrée.

Préférentiellement cette distance est de l'ordre de 3cm et dépend de la forme du jet associé aux buses.

L'eau souillée des poussières, graisses et des condensats, c'est-à-dire l'eau usée, est évacuée hors du chauffe-eau thermodynamique 1 par le système d'évacuation 12 puis 14, comme déjà mentionné.

Cette configuration assure que l'eau usée ne traverse pas l'évaporateur 5. Selon l'invention et comme illustré à la figure 4, le chauffe-eau thermodynamique 1 comprend un filtre à air 22.

Le filtre 22 est disposé de préférence en amont de l'évaporateur 5 relativement à la direction de circulation du flux d'air.

Le filtre 22 comprend un médium lavable, tel qu'un médium en plastique ou en métal non oxydable.

Comme visible sur la figure 4, deux canaux de dérivation 20 sont connectés au conduit de sortie 9.

Les buses de pulvérisation 10 sont configurées de sorte que les gouttelettes issues de chaque buse 10 atteignent le médium du filtre 22, ce qui assure le nettoyage du filtre 22.

L'eau usée est évacuée hors du chauffe-eau thermodynamique 1 par le système d'évacuation 12, comme déjà mentionné.

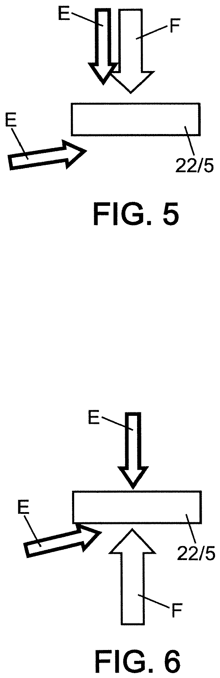

Les figures 5 et 6 illustrent différentes stratégies possibles de pulvérisation sur l'évaporateur 5 ou le filtre 22.

Comme visible sur les figures 5 et 6, les buses 10 sont de préférence disposées relativement au filtre 22 ou à l'évaporateur 5 de sorte que les jets d'eau sont dans une même direction et dans le même sens (figure 5) que le flux d'air F ou dans un sens opposé au flux d'air F (figure 6), ou encore dans une direction dans une direction faisant un angle compris entre 0° et 180° avec la direction du flux d'air F (figures 5 et 6).

Un jet d'eau dans la même direction et le même sens que le flux d'air F permet que l'air pousse les poussières, graisses ou condensats.

Un jet d'eau dans la même direction et le sens opposé que le flux d'air F assure un décolmatage efficace du filtre 22.

On note que la position des éléments, notamment sur les figures 3 et 4, n'est bien entendu pas limitative.

En particulier, il est possible de disposer l'évaporateur horizontalement ou en biais.

De même, l'évaporateur peut avoir une forme différente de la forme parallélépipédique illustrée sur les figures.

La forme et/ou la position de l'évaporateur dépend du réseau de buses et de la forme des buses.

### Pilotage de la vanne d'ouverture

Avantageusement, la vanne d'ouverture 11 est configurée pour ouvrir le conduit de sortie 9 en fonction de l'état d'au moins un paramètre de pilotage.

Un premier jeu de paramètres de pilotage PP comprend notamment un paramètre de détection d'encrassement du filtre 22 et/ou de l'évaporateur 5, un paramètre de détection de givrage de l'évaporateur 5, un paramètre temporel et un paramètre de seuil d'eau chaude dans la cuve 3.

Pour le paramètre de détection d'encrassement du filtre à air et/ou de l'évaporateur, le chauffe-eau thermodynamique 1 est muni de systèmes, connus de l'homme du métier, de détection d'encrassement du filtre 22 et/ou de l'évaporateur 5 (dépressostat, capteur de pression...).

Pour le paramètre de détection de givrage de l'évaporateur 5, le chauffe-eau thermodynamique 1 est muni d'un système, connu de l'homme du métier, de détection de givrage de l'évaporateur 5 (sonde de température, évolution des paramètres du cycle thermodynamique...).

Par paramètre temporel, on entend que l'ouverture de la vanne est déclenchée à des intervalles de temps choisis, éventuellement réguliers, au cours de la vie du chauffe-eau thermodynamique 1 et préférentiellement dans des périodes d'inoccupation du local 2 détectées en analysant par exemple des sous-tirages d'eau chaude sanitaire ou la qualité d'air du local.

Avantageusement dans ce cas, le chauffe-eau thermodynamique comprend une horloge par exemple de type automatique, programmable ou auto-adaptatif.

Par paramètre de seuil d'eau chaude dans la cuve 3, on entend que l'ouverture de la vanne est déclenchée si une quantité d'eau chaude (supérieur à une certaine température) dans la cuve 3 est supérieure à un niveau de seuil prédéterminé, ce qui évite de vider complètement le chauffe-eau de son eau chaude.

Ainsi, l'unité de pilotage commande l'ouverture de la vanne 11 quand le premier paramètre PP est tel que l'encrassement du filtre 22 et/ou de l'évaporateur 5, ou le givrage de l'évaporateur 5, a été détecté, ou est tel que le temps de nettoyage est atteint.

Eventuellement, un deuxième jeu de paramètres de pilotage DP comprend notamment un seuil de pression d'eau dans le réservoir d'eau 3 et/ou un seuil de température de l'eau dans le réservoir d'eau 3.

Le seuil de pression est de préférence d'une valeur comprise entre 3 bars et 10 bars, la valeur minimale de seuil correspondant avantageusement à une énergie minimale de pulvérisation.

Le seuil de température est avantageusement d'une valeur comprise entre 45°C et 70°C, et de préférence entre 55°C et 60°C, ce qui assure un pouvoir dégraissant suffisant à l'eau pulvérisée par les buses 10.

Ainsi, dans le mode de réalisation avec deux jeux de paramètres de pilotage, l'ouverture de la vanne est déclenchée quand le premier paramètre de pilotage PP et le deuxième paramètres de pilotage DP indiquent tous les deux l'ouverture de la vanne 11. On peut aussi lui adjoindre d'autres conditions telles que des anti-court cycles, une durée d'activation, connues de l'homme de métier.

### Procédé de nettoyage

La présente invention a également pour objet un procédé de nettoyage du chauffe-eau thermodynamique 1.

Le procédé de nettoyage comprend une étape de pulvérisation d'eau sur le filtre 22 ou sur le filtre 22 et l'évaporateur 5. De préférence, pendant l'étape de pulvérisation d'eau, le ventilateur 6 est arrêté.

Pendant le nettoyage, plusieurs types de fonctionnement sont envisageables.

Selon une première variante, le ventilateur 6 reste en fonctionnement et le flux d'air F est dévié pour ne pas traverser l'évaporateur 5 et/ou le filtre 22.

Selon une deuxième variante, il est aussi possible de ne pas dévier le flux d'air F.

Dans ce cas, le ventilateur 6 reste en fonctionnement; ce qui est particulièrement avantageux pour un chauffe-eau sur air extrait qui doit maintenir réglementairement une ventilation continue.

Dans ce cas encore, on peut augmenter la vitesse de rotation du ventilateur 6 afin d'augmenter la vitesse de passage du flux d'air F dans l'évaporateur 5 et/ou le filtre 22 pour mieux évacuer les eaux usées ruisselant sur l'évaporateur ou le filtre, ou au contraire ralentir le vitesse de rotation du ventilateur 6 pour éviter que l'eau sale ne traverse l'évaporateur.

Le procédé de nettoyage comprend une étape d'ouverture de la vanne 11 en fonction de la valeur du premier paramètre de pilotage et éventuellement du deuxième paramètre de pilotage, comme déjà indiqué.

On note qu'avantageusement, on contrôle une durée d'activation des buses 10.

Cette durée est de préférence de l'ordre de quelques secondes à une minute environ, et variable en fonction d'une mesure de perte de charge ou d'une variation de la perte de charge, ou en fonction d'un niveau de delta de température au niveau de la boucle thermodynamique ou encore d'une durée programmée fixe.

On note que le nettoyage de l'évaporateur en particulier est avantageusement activé lorsque la boucle thermodynamique (compresseur) est potentiellement à l'arrêt, notamment quand le compresseur est à l'arrêt, afin d'éviter un excès de givre ou la création de ce dernier.

Le chauffe-eau selon la présente invention présente l'avantage d'être autonettoyant, d'éviter de changer de filtre et d'éviter une perte de performance de la boucle thermodynamique, puisque l'évaporateur et/ou le filtre sont nettoyés régulièrement.

L'eau chaude sous pression pulvérisée par les buses de pulvérisation permet de retirer toutes les poussières et graisses déposées sur les ailettes de l'évaporateur et le médium du filtre.

L'eau chaude sous pression pulvérisée par les buses de pulvérisation permet également le dégivrage de l'évaporateur.

Il est aussi possible de disposer le filtre comme l'évaporateur sans tenir compte de leur accès à un opérateur, puisqu'il n'est plus nécessaire d'entretenir manuellement le chauffe-eau thermodynamique. Le filtre assure que l'air destiné à traverser les ailettes de l'évaporateur, soit débarrassé d'une certaine quantité de poussières.

Par ailleurs, le chauffe-eau thermodynamique selon la présente invention peut être un chauffe-eau thermodynamique sur air extrait, air d'un local annexe ou encore air extérieur.

Il est bien entendu que la présente invention peut aisément être appliquée à des systèmes connus de l'homme du métier sous les termes « trois en un » ou « deux en un » assurant respectivement, chauffage de l'air, approvisionnement en eau chaude sanitaire et ventilation ou chauffage de l'air et ventilation.

Que ce soit pour la fonction d'approvisionnement en eau chaude sanitaire ou chauffage de l'air, le besoin de filtration et/ou de dégivrage est utile voire nécessaire dans ces systèmes, comme déjà indiqué.

## Revendications

1. Chauffe-eau thermodynamique, comprenant un réservoir (3) d'eau à chauffer et au moins un échangeur de chaleur (5), ledit chauffe-eau thermodynamique comprenant au moins un conduit (9) de sortie de l'eau hors du réservoir (3) d'eau à chauffer, au moins une buse de pulvérisation (10) de l'eau issue dudit au moins un conduit de sortie (9) et un filtre à air (22), le chauffe-eau étant **caractérisé par le fait que** l'une au moins des buses de pulvérisation (10) est configurée pour pulvériser de l'eau sur ledit filtre à air (22) ou sur ledit filtre à air (22) et ledit au moins un échangeur de chaleur (5) du chauffe-eau thermodynamique (1).

2. Chauffe-eau thermodynamique selon la revendication 1, comprenant un conduit d'approvisionnement d'un local en eau chaude, éventuellement eau chaude sanitaire, connecté au réservoir d'eau (3).

3. Chauffe-eau thermodynamique selon l'une quelconque des revendications précédentes, comprenant une vanne d'ouverture (11) dudit au moins un conduit de sortie (9).

4. Chauffe-eau thermodynamique selon la revendication précédente, dans lequel la vanne d'ouverture (11) est configurée pour ouvrir ledit au moins un conduit de sortie (9) en fonction de l'état d'au moins un paramètre de pilotage d'ouverture de la vanne.

5. Chauffe-eau thermodynamique selon la revendication précédente, dans lequel ledit au moins un paramètre de pilotage d'ouverture de la vanne est un paramètre de détection d'encrassement du filtre à air et/ou de givrage dudit au moins un échangeur de chaleur et/ou un paramètre temporel et/ou un seuil de pression d'eau dans le réservoir d'eau de préférence d'une valeur comprise entre 3 bars et 10 bars et/ou un seuil de température d'eau dans le réservoir d'eau d'une valeur de préférence comprise entre 45°C et 70°C.

6. Chauffe-eau thermodynamique selon l'une quelconque des revendications précédentes, comprenant un réservoir de produit nettoyant en communication fluidique avec le conduit de sortie (9).

7. Chauffe-eau thermodynamique selon l'une quelconque des revendications précédentes, dans lequel le conduit de sortie (9) comprend un clapet anti-retour.

8. Chauffe-eau thermodynamique selon l'une quelconque des revendications précédentes, comprenant un ventilateur (6), de préférence configuré pour gérer la ventilation d'un local.

9. Procédé de nettoyage d'un chauffe-eau thermodynamique selon l'une des revendications 1 à 8, comprenant une étape de pulvérisation d'eau sur ledit au moins un échangeur de chaleur (5) et le filtre à air (22) du chauffe-eau thermodynamique ou sur le filtre à air (22) du chauffe-eau thermodynamique.

10. Procédé de nettoyage selon la revendication précédente d'un chauffe-eau thermodynamique selon l'une des revendications 4 à 8, comprenant une étape d'ouverture de la vanne (11) en fonction de l'état d'au moins un paramètre de pilotage d'ouverture de la vanne.

## Patentansprüche

1. Thermodynamischer Boiler, der einen Behälter (3) mit zu erwärmendem Wasser und mindestens einen Wärmeübertrager (5) umfasst, wobei der thermodynamische Boiler mindestens eine Leitung (9) zum Herausleiten von Wasser aus dem Behälter (3) mit zu erwärmendem Wasser, mindestens eine Sprühdüse (10) für das Wasser aus der mindestens einen Austrittsleitung (9) und einen Luftfilter (22) umfasst, wobei der Boiler **dadurch gekennzeichnet ist, dass** mindestens eine der Sprühdüsen (10) so eingerichtet ist, dass sie Wasser auf den Luftfilter (22) oder auf den Luftfilter (22) und den mindestens einen Wärmeübertrager (5) des thermodynamischen Boilers (1) sprüht.

2. Thermodynamischer Boiler nach Anspruch 1, der eine Leitung zur Versorgung eines Raums mit Warmwasser, gegebenenfalls mit Warmwasser für den häuslichen Bedarf, umfasst, die mit dem Wasserbehälter (3) verbunden ist.

3. Thermodynamischer Boiler nach einem der vorhergehenden Ansprüche, der ein Öffnungsventil (11) für die mindestens eine Austrittsleitung (9) umfasst.

4. Thermodynamischer Boiler nach dem vorhergehenden Anspruch, wobei das Öffnungsventil (11) so eingerichtet ist, dass es die mindestens eine Austrittsleitung (9) in Abhängigkeit vom Zustand von mindestens einem Ventilöffnungs-Steuerungsparameter öffnet.

5. Thermodynamischer Boiler nach dem vorhergehenden Anspruch, wobei der mindestens eine Ventilöffnungs-Steuerungsparameter ein Parameter zur Erkennung einer Verschmutzung des Luftfilters und/oder einer Vereisung des mindestens einen Wärmeübertragers und/oder ein Zeitparameter und/oder ein Druckschwellenwert des Wassers im Wasserbehälter vorzugsweise bei einem Wert zwischen 3 Bar und 10 Bar und/oder ein Temperaturschwellenwert des Wassers im Wasserbehälter vorzugsweise bei einem Wert zwischen 45°C und 70°C ist.

6. Thermodynamischer Boiler nach einem der vorhergehenden Ansprüche, der einen Behälter für ein Reinigungsmittel in Fluidverbindung mit der Austrittsleitung (9) umfasst.

7. Thermodynamischer Boiler nach einem der vorhergehenden Ansprüche, wobei die Austrittsleitung (9) ein Rückschlagventil umfasst.

8. Thermodynamischer Boiler nach einem der vorhergehenden Ansprüche, der einen Lüfter (6) umfasst, der vorzugsweise so eingerichtet ist, dass er die Be- und Entlüftung eines Raums regelt.

9. Reinigungsverfahren für einen thermodynamischen Boiler nach einem der Ansprüche 1 bis 8, das einen Schritt zum Sprühen von Wasser auf den mindestens einen Wärmeübertrager (5) und den Luftfilter (22) des thermodynamischen Boilers oder auf den Luftfilter (22) des thermodynamischen Boilers umfasst.

10. Reinigungsverfahren nach dem vorhergehenden Anspruch für einen thermodynamischen Boiler nach einem der Ansprüche 4 bis 8, das einen Schritt zum Öffnen des Ventils (11) in Abhängigkeit vom Zustand von mindestens einem Ventilöffnungs-Steuerungsparameter umfasst.

## Claims

1. Thermodynamic water heater, comprising a tank (3) of water to be heated and at least one heat exchanger (5), said thermodynamic water heater comprising at least one pipe (9) for discharging water from the tank (3) of water to be heated, at least one nozzle (10) for spraying the water from said at least one discharge pipe (9) and an air filter (22), the water heater being **characterised by** the fact that at least one of the spray nozzles (10) is configured to spray water onto said air filter (22) or onto said air filter (22) and said at least one heat exchanger (5) of the thermodynamic water heater (1).

2. Thermodynamic water heater as claimed in claim 1, comprising a pipe for supplying premises with hot water, possibly domestic hot water, connected to the water tank (3).

3. Thermodynamic water heater as claimed in any one of the preceding claims, comprising a valve (11) for opening said at least one discharge pipe (9).

4. Thermodynamic water heater as claimed in the preceding claim, wherein the opening valve (11) is configured to open said at least one discharge pipe (9) as a function of the state of at least one control parameter for opening the valve.

5. Thermodynamic water heater as claimed in the preceding claim, wherein said at least one control parameter for opening the valve is a detection parameter based on clogging of the air filter and/or icing of said at least one heat exchanger and/or a time parameter and/or a water pressure threshold in the water tank, preferably of a value of between 3 bar and 10 bar, and/or a water temperature threshold in the water tank of a value preferably between 45°C and 70°C.

6. Thermodynamic water heater as claimed in any one of the preceding claims, comprising a tank of cleaning product fluidically communicating with the discharge pipe (9).

7. Thermodynamic water heater as claimed in any one of the preceding claims, wherein the discharge pipe (9) comprises a check valve.

8. Thermodynamic water heater as claimed in any one of the preceding claims, comprising a fan (6) preferably configured to manage ventilation of premises.

9. Method of cleaning a thermodynamic water heater as claimed in one of claims 1 to 8 comprising a step of spraying water onto said at least one heat exchanger (5) and the air filter (22) of the thermodynamic water heater or onto the air filter (22) of the thermodynamic water heater.

10. Method as claimed in the preceding claim for cleaning a thermodynamic water heater as claimed in one of claims 4 to 8, comprising a step of opening the valve (11) as a function of the state of at least one control parameter for opening the valve.
